# EUROPÄISCHE PATENTSCHRIFT

(11) **EP 0 585 273 B1**
(45) Veröffentlichungstag und Bekanntmachung des Hinweises auf die Patenterteilung: **11.01.1995**
(21) Anmeldenummer: 92909659.2
(22) Anmeldetag: 08.05.1992
(51) Int. Cl.: B29C 47/88

(54) **FOLIENBLASANLAGE ZUR HERSTELLUNG VON KUNSTSTOFFOLIEN**
FILM-BLOWING ARRANGEMENT FOR MANUFACTURING PLASTIC FILMS
INSTALLATION DE SOUFFLAGE DE FEUILLES POUR LA PRODUCTION DE FEUILLES EN MATIERE PLASTIQUE

(30) Priorität: 10.05.1991 DE 4115353
(43) Veröffentlichungstag der Anmeldung: 09.03.1994
(73) Patentinhaber: Veit-Holger, Karl Dr.-Ing.,, D-97076 Würzburg (DE)
(72) Erfinder: Veit-Holger, Karl Dr.-Ing.,, D-97076 Würzburg (DE)
(74) Vertreter: Pöhner, Wilfried Anton, Dr.
(86) Internationale Anmeldenummer: EP9201032
(87) Internationale Veröffentlichungsnummer: WO9220513

(56) Entgegenhaltungen:
- EP-A- 0 273 739
- WO-A-90/15707
- US-A- 4 373 273
- US-A- 4 399 094
- US-A- 4 443 400
- US-A- 4 472 343
- PATENT ABSTRACTS OF JAPAN vol. 12, no. 120 (M-685)(2967) 14. April 1988 & JP,A,62 246 714 (IDEMITSU PETROCHEM CO LTD) 27. Oktober 1987

## Beschreibung

Die Erfindung betrifft eine Folienblasanlage zur Herstellung von Kunststoffolien aus Thermoplasten, mit einem Blaskopf, über dem ein Kühlring angeordnet ist und einer in Bewegungsrichtung der Folie dahinter befindlichen Meßvorrichtung für die Foliendicke, bei der die Kühlleistung über den Umfang des Schlauches durch Änderung der Durchsatzmenge des Kühlringes, die über einen Luftaustritt abgegeben wird, unterschiedlich steuerbar ist und die jeweilige Einstellung in jedem Bereich entsprechend der Meßwerte der Meßvorrichtung gesteuert ist, und der Kühlring im Bereich des und in Strömungsrichtung der Luft vor dem Luftaustritt über den Umfang verteilte Öffnungen aufweist, durch die überschüssige Luft abgeführt wird sowie im Kühlring die Luft in radiale Richtung geführt und eine Lippe angebracht ist, die einen Ring bildet, deren angeströmte Kante in ihrer Position veränderbar ist und die anströmende Luft über die Lippe aufgeteilt wird.

Eine vergleichbare Vorrichtung ist aus der auf den gleichen Anmelder zurückgehenden DE-PS 3743 720 bekannt, bei der über eine Meßvorrichtung die Foliendicke über ihren Umfang erfaßt wird und bei Abweichungen vom Sollwert an der entsprechend zugeordneten Stelle des Umfanges der noch nicht erstarrten Blasfolie die Kühlleistung verändert und eingestellt wird. Bei einer Erhöhung der Kühlleistung wird die in diesem Bereich der Anlage stattfindende Verstreckung der Folie aufgrund der raschen Erstarrung verringert, so daß eine vergleichsweise dicke Wandstärke zurückbleibt. Andererseits verlängert sich bei einer Verringerung der Kühlleistung derjenige Zeitraum, in welchem die Folie verstreckbar ist, mit dem Ergebnis einer weiteren Verringerung der Wandstärke. Die Beeinflussung der Kühlleistung erfolgt durch Änderung der Durchsatzmenge der den Kühlring passierenden Luft. Um eine unterschiedliche Beeinflussung über den Umfang der Schlauchfolie vornehmen zu können, erfolgt eine Unterteilung des Kühlringes durch in radialer Richtung verlaufende und dadurch Sektoren bildende Zwischenwände, deren obere und/oder untere Begrenzung in ihrer räumlichen Position verändert wird, so daß der der Kühlluft zur Verfügung stehende Querschnitt und demzufolge die Durchsatzmenge in diesem Bereich beeinflußt wird.
In der Praxis hat sich diese Vorrichtung als mit erheblichen Nachteilen behaftet herausgestellt. Zum einen lassen die Zwischenwände nur eine über den Umfang der Schlauchfolie sprunghafte Änderung der Kühlleistung zu, die entsprechend der Gegebenheiten und über den Umfang der Schlauchfolie gesehen jedoch vergleichsweise stetig erfolgen sollte. Zudem ergeben die Zwischenwände aus strömungsdynamischen Gründen Anlaß zur Ausbildung von Wirbeln und anderen ungleichmäßigen punktuellen Strömungen, die eine undefinierte und weitgehend unbeherrschbare Beeinflussung der Kühlleistung bedeuten.

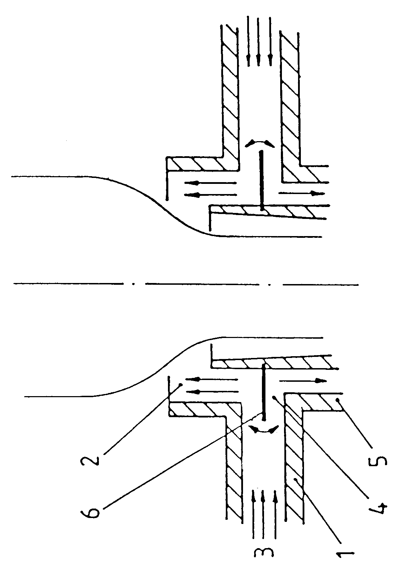

Als gattungsbildend wird die WO 90/15707 angesehen, die mehrere verschiedene Lösungen der Einstellung der Kühlluft über den Umfang der Folienblase angibt. Sie schlägt zum Beispiel ausweislich der Darstellung in Figur 10 vor, am Auslaß des Austrittsspaltes durch Eingreifen in die abströmende Kühlluft einen entsprechenden und in seiner Menge veränderbaren Anteil der Kühlluft von der Folienblase wegzuleiten. Eine weitere, als gattungsbildend angesehene Lösung gibt die Anordnung von separaten Öffnungen auf einem koaxial zum Austrittsspalt und außerhalb desselben verlaufenden Kranz an. Im Inneren greifen Stellglieder in den Kühlluftstrom ein und leiten einen entsprechend ihrer Stellung mehr oder weniger großen Anteil über die Öffnung nach außen, der dann der Kühlung der Folienblase nicht mehr zur Verfügung steht (siehe Figur 5 dieser Druckschrift). Als nachteilig ist anzusehen, daß sich in Abhängigkeit von der Regelphase der Strömungswiderstand der Kühlluft ändert, die Ausbildung von Wirbeln unvermeidlich ist und demzufolge regelungstechnisch kaum beherrschbare und irreproduzierbare Verhältnisse schaffende Strömungen entstehen.

Hiervon ausgehend hat sich die Erfindung die Weiterentwicklung derartiger Folienblasanlagen mit Kühlring dahingehend zur Aufgabe gemacht, daß ein über den Umfang der Schlauchfolie stetiger Verlauf der Kühlleistung des Kühlringes eingestellt werden kann.

Gelöst wird diese Aufgabe erfindungsgemäß dadurch, daß die Öffnungen in ihrer Gesamtheit einen Ringspalt bilden, der sich in axialer Richtung gegenüber dem Luftaustritt befindet, die Lippe gleichzeitig sowohl den Einlaß des Ringspaltes als auch den Kanal zum Luftaustritt begrenzt und etwa entgegen der Strömungsrichtung weist sowie die anströmende Luft einerseits in axialer Richtung zum Luftaustritt und andererseits über den Ringspalt zu der von dieser wegführenden Leitung geleitet wird.

Die Erfindung übernimmt aus dem Stand der Technik den Gedanken, die Kühlleistung über den Umfang des Schlauches dadurch zu verändern und einzustellen, daß die Durchsatzmenge des Kühlringes über den Umfang unterschiedlich gesteuert und eingestellt wird. Der Kerngedanke besteht in der konkreten Realisierung der Durchsatzmenge des Kühlringes. So findet die Beeinflussung der Durchsatzmenge dadurch statt, daß unter Beibehaltung des Querschnittes des Luftaustrittes des Kühlringes mit Hilfe eines Ringspaltes Luft abgeführt wird. In funktioneller Hinsicht folgt hieraus, daß aufgrund der durch den Ringspalt abgeführten Luft eine Verminderung der pro Zeiteinheit durchgehenden und als Kühlmedium wirkenden Luft vornehmbar wird. Aufgrund der Anordnung der Lippe vor dem Luftaustritt ist sichergestellt, daß die aufgrund der Aufteilung in zwei Luftströme unterschiedlicher Richtungen und Stärke auftretenden und ausgelösten Turbulenzen im wesentlichen im Inneren des Kühlringes verbleiben und abklingen, so daß sichergestellt ist, daß im Bereich des Luftaustrittes, aber insbesondere beim Auftreffen auf den Folienschlauch laminare Strömungsverhältnisse vorliegen.
Innerhalb des Kühlringes ist eine Lippe angeordnet, die der strömenden Luft entgegengerichtet und in ihrer räumlichen Einstellung veränderbar ist. Die Lippe teilt den ankommenden Luftstrom in einen durch den Ringspalt weggeführten Anteil und den zweiten, der zum Luftaustritt gelangt, auf. Durch die Änderung der räumlichen Position der Lippe läßt sich das Mischungsverhältnis der beiden Luftanteile verändern.
Die Lippe dient als Trennwand zwischen beiden Öffnungen bzw. deren Kanäle. Eine Veränderung ihrer räumlichen Position vergrößert den Ringspalt und verkleinert gleichzeitig den Luftaustritt oder umgekehrt. Dabei verändert die Lippe den Luftaustritt selbst nicht, sondern in Strömungsrichtung davor den effektiven (lichten) Querschnitt der durchströmenden und zum Luftaustritt gelangenden Luft. Die Lippe, die als Trennwand zwischen dem zum Luftaustritt führenden Kanal und der Öffnung dient, ist als Ring ausgebildet, deren angeströmte Kante in ihrer Position veränderbar ist. Mit Bewegung der Kante in der einen Richtung vergrößert bzw. verkleinert sich der der jeweiligen Strömung zur Verfügung stehende Querschnitt, die zum Luftaustritt bzw. durch die Öffnungen führt, wodurch eine mengenmäßige Steuerung möglich ist. Dabei bleibt die Summe beider Querschnitte während jeder Steuerphase konstant.
Der Luftaustritt ist in axialer Richtung gegenüber dem Ringspalt mit dem Anfang der wegführenden Leitungen angeordnet.

Da die Luft innerhalb des Kühlringes in radiale Richtung geleitet wird, über eine demzufolge ebenfalls im wesentlichen in radiale Richtung weisenden Lippe in zwei Strömungen aufgeteilt wird, die beide dann in axialer Richtung entweder zum Luftaustritt, d.h. zur Folie hin oder in Gegenrichtung über den Ringspalt zu der von dieser weggerichteten Leitung geführt wird.

Die hierdurch erreichbaren Vorteile sind folgende: Aus den soeben geschilderten Gründen entstehen im Gegensatz zu den aus dem Stand der Technik bekannten Zwischenwände keine sprunghaften Änderungen sondern ein vergleichsweise gleichmäßiger Verlauf der Kühlleistung über den Umfang. Des weiteren wird die Ausbildung von Wirbeln, die aufgrund der als Abreißkante wirkenden äußeren Umrandung jeder Zwischenwand häufig auftreten, völlig vermieden. Im Ergebnis erhält man eine über den Umfang unterschiedlich einstellbare Kühlleistung mit stetigen Übergängen und ohne Auftreten unkontrollierbarer Strömungswirbel.

Die konkrete bauliche Realisierung der erfindungsgemäß vorgeschlagenen Lippe kann bei starrem Material durch Verschwenken im Bereich der der angeströmten gegenüberliegenden und der Befestigung dienenden Kante erfolgen. Für den Ring empfiehlt sich entweder die Wahl eines elastischen Materiales, die eine über den Umfang unterschiedliche Einstellung erlaubt, oder die Anbringung von radial auf den Mittelpunkt des Ringes zu verlaufende Schlitze, wodurch Zungen entstehen, denen jeweils ein Stellglied zugeordnet ist und die demzufolge unabhängig voneinander positionsveränderlich sind.

Das Stellglied muß zur Veränderung der räumlichen Position der angeströmten Kante denknotwendig zumindest teilweise im Luftstrom angeordnet sein. Hier empfiehlt sich, das Stellglied von der Seite des Ringspaltes bzw. der Leitung her, d.h. von jener Seite, in der die Luft nach außen abgeführt wird, angreifen zu lassen, um in dem zum Luftaustritt führenden Luftstrom keine negativen Auswirkungen auf der Folienblase führende Wirbel entstehen zu lassen.

Die konkrete Ausbildung des Stellgliedes ist im Rahmen der Erfindung grundsätzlich beliebig. Empfohlen wird ein von der Steuereinheit betätigtes und an der Lippe angreifendes Hebelgestänge.

Um definierte und reproduzierbare Steuerverhältnisse zu schaffen, die zudem weitgehend im Hinblick auf die Bewegung der Lippe linearisierbar sein sollten, so daß die Querschnittsveränderung der aneinander angrenzenden Strömungsquerschnitte proportional der durchströmenden Menge ist, ist der Aufbau des Kühlringes so zu dimensionieren, daß der Strömungswiderstand in beiden Querschnitten etwa gleich ist, d.h. daß der Strömungswiderstand für die über den Luftaustritt abgegebenen etwa der über den Ringspalt entweichenden Luft ist. Dieses als optimal angestrebte Ziel läßt sich annähern, wenn die sowohl der über den Luftaustritt austretenden Luft als auch der über den Ringspalt abgeführten Luft dargebotenen Querschnitte im üblichen Betriebszustand etwa gleich sind.

Schließlich ist vorgesehen, daß zur konkreten Realisierung eine zum Kühlring koaxiale und im Abstand angeordnete Scheibe angebracht ist, in der die durch die Öffnung erfaßte Luft abgeleitet und im wesentlichen in radialer Richtung dann nach außen vom Kühlring weggeführt wird.

Weitere Einzelheiten, Merkmale und Vorteile der Erfindung lassen sich dem nachfolgenden Beschreibungsteil entnehmen, in dem anhand der Zeichnung ein Ausführungsbeispiel der Erfindung näher erläutert wird.

Die Zeichnung zeigt ausschnittsweise einen Kühlring (1) in Querschnittsdarstellung. Zu sehen ist der Luftaustritt (2), über den die in der Zeichnung von der linken Seite her einströmende Luft (3) über den Luftaustritt (2) nach außen zu dem gezeigten Schlauch gelangt.
Die austretende Menge an Luft weicht in aller Regel von der auf der linken Seite her einströmenden Luft (3) dadurch ab, daß über den Ringspalt (4) in definierter Weise Luft abgeführt wird.

Eine Lippe (6) ist etwa der Richtung der anströmenden Luft (3) entgegengerichtet, so daß die ankommende Luft (3) in einen nach oben in Richtung auf den Luftaustritt (2) zu sowie einen weiteren zur Leitung (5) gelangenden Anteil aufgespalten wird. Die Lippe (6) ist in ihrer räumlichen Lage veränderbar und macht, da sie teilweise den Ringspalt begrenzt, deren angeströmten Querschnitt veränderbar. Die Bewegung der Lippe (6) bewirkt eine Veränderung und Beeinflussung des Anteiles der anströmenden und zum Luftaustritt (2) gelangenden Luft (3). Ohne Begrenzung der Allgemeinheit eignet sich diese Ausführungsform in besonderer Weise dann, wenn vornehmlich die einströmende Luft teilweise abgeführt werden soll.

Im Ergebnis erhält man die Möglichkeit, über einen Ringspalt eine individuelle Abführung von Luft zur Beeinflussung der Kühlleistung zu erreichen. Beibehalten bleibt im wesentlichen das Strömungsverhalten der über den Luftaustritt (2) austretenden Luft (3). Gleichzeitig ist bei Änderung der Kühlleistung über den Umfang des Kühlringes ein stetiger Verlauf garantiert.

## Patentansprüche

1. Folienblasanlage zur Herstellung von Kunststofffolien aus Thermoplasten, mit einem Blaskopf, über dem ein Kühlring angeordnet ist und einer in Bewegungsrichtung der Folie dahinter befindlichen Meßvorrichtung für die Foliendicke, bei der die Kühlleistung über den Umfang des Schlauches durch Änderung der Durchsatzmenge des Kühlringes, die über einen Luftaustritt abgegeben wird, unterschiedlich steuerbar ist und die jeweilige Einstellung in jedem Bereich entsprechend der Meßwerte der Meßvorrichtung gesteuert ist, und der Kühlring (1) im Bereich des und in Strömungsrichtung der Luft (3) vor dem Luftaustritt (2) über den Umfang verteilte Öffnungen (4) aufweist, durch die überschüssige Luft abgeführt wird sowie im Kühlring die Luft in radiale Richtung geführt und eine Lippe angebracht ist, die einen Ring bildet, deren angeströmte Kante in ihrer Position veränderbar ist und die anströmende Luft über die Lippe aufgeteilt wird, **dadurch gekennzeichnet**, daß die Öffnungen (4) in ihrer Gesamtheit einen Ringspalt bilden, der sich in axialer Richtung gegenüber dem Luftaustritt (2) befindet,
daß die Lippe gleichzeitig sowohl den Einlaß des Ringspaltes als auch den Kanal zum Luftaustritt begrenzt und etwa entgegen der Strömungsrichtung weist sowie die anströmende Luft einerseits in axialer Richtung zum Luftaustritt (2) und andererseits über den Ringspalt zu der von dieser wegführenden Leitung (5) geleitet wird.

2. Anlage nach Anspruch 1, **dadurch gekennzeichnet**, das der Ring aus elastischem Material besteht und/oder von der angeströmten Kante auf den Mittelpunkt des Ringes zu radial verlaufende Schlitze aufweist, sowie den hierdurch gebildeten Zungen jeweils ein Stellglied zugeordnet ist.

3. Anlage nach einem der Ansprüche 1 oder 2, **dadurch gekennzeichnet**, daß an der Lippe (6) das Stellglied von der Seite des Ringspaltes bzw. der Leitung (5) her angreift.

4. Anlage nach einem der Ansprüche 1 bis 3, **dadurch gekennzeichnet**, daß das Stellglied ein von einer Steuereinheit betätigtes Hebelgestänge ist.

5. Anlage nach einem der Ansprüche 1 bis 4, **dadurch gekennzeichnet**, daß der Aufbau des Kühlringes (1) so dimensioniert ist, daß der Strömungswiderstand der über den Luftaustritt (2) austretenden etwa der über den Ringspalt entweichenden Luft ist.

6. Anlage nach Anspruch 5, **dadurch gekennzeichnet**, daß der jeweilig dargebotene Querschnitt für die aus dem Luftaustritt (2) austretende sowie die über den Ringspalt abgeführte Luft im Bereich der Lippe (6) und in einem gewissen dahinter sich anschließenden Bereich etwa gleich groß ist.

7. Anlage nach einem der Ansprüche 1 bis 6, **dadurch gekennzeichnet**, daß die vom Ringspalt wegführende Leitung (5) durch eine koaxiale und im Abstand zum Kühlring (1) angeordnete Schein gebildet ist.

## Claims

1. Film blowing line for manufacturing plastic films from thermoplastics, having a blow head, over which is disposed a cooling ring and behind it in the direction of movement of the film a measuring device for the film thickness, whereby the cooling capacity across the circumference of the tube can be controlled variably by altering the throughput quantity of the cooling ring, which is released via an air outlet, and respective adjustment in every region is controlled according to the measurement values of the measuring device, and cooling ring (1) has openings (4) distributed across the circumference in the region of air outlet (2) and in the flow direction of the air (3) and in front of air outlet (2), through which the surplus air is carried away and in the cooling ring the air is conveyed in a radial direction and a lip is disposed which forms a ring whose edge facing the flow is changeable in its position and the arriving air is divided via the lip, **wherein** in their entirety said openings (4) form an annular gap which in an axial direction is disposed opposite said air outlet (2),
that said lip at the same time borders both the inlet of the annular gap as well as the duct to the air outlet and points more or less against the flow direction and the arriving air, on the one hand, is directed in an axial direction to said air outlet (2) and, on the other hand, via the annular gap to the line (5) leading away from the lip.

2. Line according to claim 1, **wherein** said ring consists of an elastic material and/or has slots extending radially from the edge facing the flow toward the centre of the ring and each of the tongues formed thereby is assigned an actuator.

3. Line according to one of claims 1 or 2, **wherein** at said lip (6) said actuator engages from the side of said annular gap and/or said line (5).

4. Line according to one of claims 1 to 3, **wherein** said actuator is a lever bar operated by a control unit.

5. Line according to one of claims 1 to 4, **wherein** the structure of said cooling ring (1) is dimensioned in such a way that the flow resistance of the air leaving via said air outlet (2) is more or less the same as the flow resistance of the air escaping via said annular gap.

6. Line according to claim 5, **wherein** the respective cross section offered to the air leaving said air outlet (2) and the air escaping via said annular gap in the region of said lip (6) and in a specific adjacent region behind it is more or less of the same size.

7. Line according to one of claims 1 to 6, **wherein** said line (5), which leads away from said annular gap, is formed by a disc which is disposed coaxially and at a distance to said cooling ring (1).

## Revendications

1. Installation de soufflage de feuilles pour la production de feuilles en matière plastique à partir de matières thermoplastiques, comprenant une tête de soufflage sur laquelle est disposé un anneau de refroidissement ainsi qu'un dispositif de mesure de l'épaisseur de feuille, situé en aval par rapport au sens de déplacement de la feuille, pour laquelle la puissance de refroidissement à la périphérie de la gaine est contrôlable de façon variable par modification de la quantité de débit de l'anneau de refroidissement, qui s'échappe par la sortie d'air, le réglage respectif dans chaque zone étant contrôlé en fonction des valeurs mesurées du dispositif de mesure, l'anneau de refroidissement (1) comportant dans la zone de la sortie d'air (2), mais en amont de celle-ci par rapport au sens de l'écoulement de l'air (3), des ouvertures (4) réparties à sa périphérie, au travers desquelles l'air en excès est prélevé, l'air étant guidé radialement dans l'anneau de refroidissement et une lèvre y étant disposée, qui constitue un anneau, et dont le bord qui fait face à l'écoulement est orientable de façon variable, et l'air incident étant divisé sur la lèvre,
**caractérisée en ce que** les ouvertures (4) constituent globalement un espace annulaire, qui est situé axialement en face de la sortie d'air (2), en ce que la lèvre limite simultanément l'entrée de l'espace annulaire ainsi que le canal de sortie d'air et est orientée sensiblement face à l'écoulement, l'air incident étant dirigé d'une part axialement en direction de la sortie d'air (2) et d'autre part à travers l'espace annulaire vers le conduit (5) qui l'en éloigne.

2. Installation selon la revendication 1, **caractérisée en ce que** l'anneau est en un matériau élastique et/ou présente des fentes s'étendant radialement depuis l'arête faisant face à l'écoulement vers le centre de l'anneau, un élément individuel de réglage étant assigné à chacune des languettes ainsi constituées.

3. Installation selon l'une des revendications 1 ou 2, **caractérisée en ce que** l'élément de réglage agit sur la lèvre (6) par le côté de l'espace annulaire ou de la conduite (5).

4. Installation selon l'une des revendications 1 à 3, **caractérisée en ce que** l'élément de réglage est constitué d'un système de leviers commandé par une unité de contrôle.

5. Installation selon l'une des revendications 1 à 4, **caractérisée en ce que** la structure de l'anneau de refroidissement est dimensionnée de façon telle que la résistance à l'écoulement pour l'air délivré par la sortie d'air (2) est environ égale à celle pour l'air détourné par l'espace annulaire.

6. Installation selon la revendication 5, **caractérisée en ce que** les sections de passage offertes tant à l'air s'échappant par la sortie d'air (2) qu'à l'air détourné à travers l'espace annulaire au droit de la lèvre (6) et dans une certaine portion de la zone qui s'étend au-delà, sont sensiblement de même dimension.

7. Installation selon l'une des revendications 1 à 6, **caractérisée en ce que** le conduit de détournement (5) partant de l'espace annulaire est constitué d'un disque disposé coaxialement à l'anneau de refroidissement (1) et à distance de ce dernier.
